# FASCICULE DE BREVET EUROPEEN

(11) **EP 2 149 221 B1**
(45) Date de publication et mention de la délivrance du brevet: **12.09.2012**
(21) Numéro de dépôt: 08805825.0
(22) Date de dépôt: 21.05.2008
(51) Int. Cl.: H04L 9/32

(54) **PROCEDE D'AUTHENTIFICATION D'UNE ENTITE PAR UNE ENTITE VERIFICATRICE**
VERFAHREN ZUR AUTHENTIFIZIERUNG EINER ENTITÄT DURCH EINE VERIFIZIERUNGSENTITÄT
METHOD OF AUTHENTICATION OF AN ENTITY BY A VERIFYING ENTITY

(30) Priorité: 23.05.2007 FR 0755216
(43) Date de publication de la demande: 03.02.2010
(73) Titulaire: FRANCE TELECOM, 75015 Paris (FR)
(72) Inventeur: ROBSHAW, Matthew, F-75010 Paris (FR); GILBERT, Henri, F-91440 Bures Sur Yvette (FR)
(86) Numéro de dépôt international: PCT/FR2008/050879
(87) Numéro de publication internationale: WO 2008/149031

(56) Documents cités:
- PIRAMUTHU ET AL: "Protocols for RFID tag/reader authentication" DECISION SUPPORT SYSTEMS, ELSEVIER SCIENCE PUBLISHERS, AMSTERDAM, NL, vol. 43, no. 3, 27 mars 2007 (2007-03-27), pages 897-914, XP022003386 ISSN: 0167-9236
- MUNILLA ET AL: "HB-MP: A further step in the HB-family of lightweight authentication protocols" COMPUTER NETWORKS, ELSEVIER SCIENCE PUBLISHERS B.V., AMSTERDAM, NL, vol. 51, no. 9, 29 avril 2007 (2007-04-29), pages 2262-2267, XP022122107 ISSN: 1389-1286
- ARI JUELS ET AL: "Authenticating Pervasive Devices with Human Protocols" ADVANCES IN CRYPTOLOGY - CRYPTO 2005 LECTURE NOTES IN COMPUTER SCIENCE;;LNCS, SPRINGER-VERLAG, BE, vol. 3621, 2005, pages 293-308, XP019016557 ISBN: 3-540-28114-2 cité dans la demande

## Description

La présente invention concerne un procédé d'authentification d'une entité à authentifier auprès d'une entité vérificatrice.

L'invention trouve une application particulièrement avantageuse dans le domaine des protocoles cryptographiques d'authentification de puces électroniques à très bas coût, avec ou sans contact, notamment les étiquettes radiofréquence RFID (« *RadioFrequency IDentification* »).

Les puces électroniques à bas coût, du type RFID par exemple, sont utilisées dans de nombreuses applications comme l'étiquetage et le traçage d'objets (médicaments, livres d'une bibliothèque, etc.), ou encore la production et la vérification de tickets ou de billets électroniques, tels que des titres de transport.

Quelle que soit l'application considérée, il est nécessaire de prévenir les fraudes qui pourraient survenir sur la base de la falsification des puces, en particulier leur recopie, ou clonage, ou le rejeu des données qu'elles transmettent. Afin de protéger les applications contre de telles attaques, il est impératif de procéder à une authentification des puces lors de leurs interactions avec un lecteur.

Cependant, tout protocole d'authentification entre une entité à authentifier, comme une puce à bas coût, et un lecteur jouant le rôle d'entité vérificatrice, doit tenir compte de l'extrême limitation des ressources de calcul de ce type de puces, qui sont le plus souvent à logique câblée.

Récemment, il a été proposé (A. Juels et S.A. Weis, « Authenticating Pervasive Devices with Human Protocols », in V. Shoup, Editor, Advances in Cryptology-Crypto 05, Lectures Notes in Computer Science, Vol. 3126, pp. 293-308, Springer Verlag) un protocole d'authentification symétrique spécifiquement conçu pour répondre aux besoins des puces RFID. Ce protocole est connu sous le nom de HB+ (Hopper-Blum).

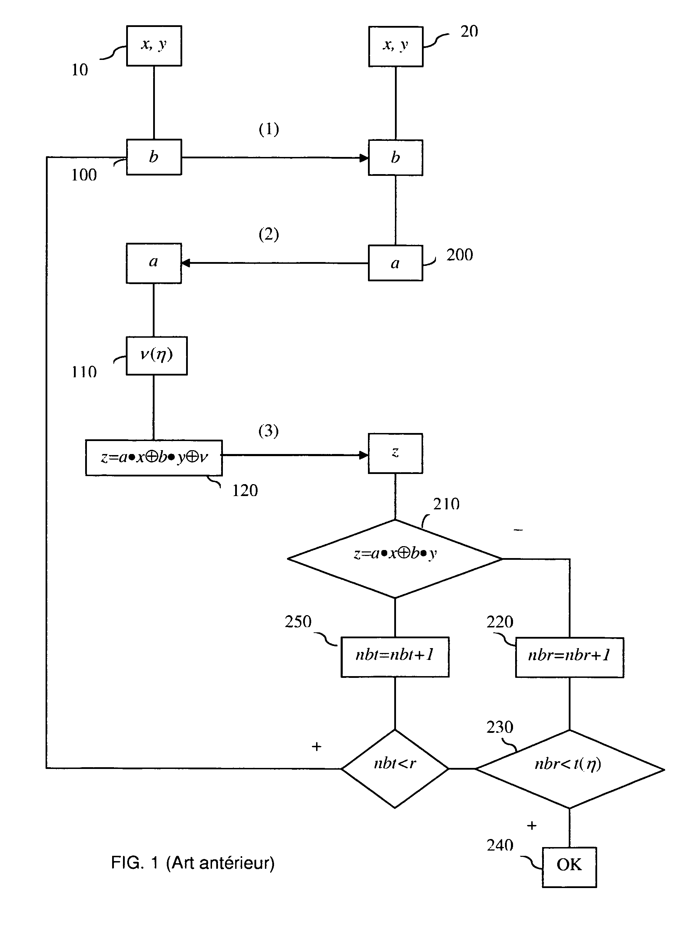

La figure 1 représente les échanges de données effectués au cours du protocole HB+ entre l'entité à authentifier et l'entité vérificatrice.

Comme on peut le voir sur cette figure, l'entité à authentifier, une puce RFID par exemple, et l'entité vérificatrice, un lecteur de la puce, partagent une paire de clés secrètes *x* et *y* constituées par des vecteurs binaires de *n* bits. Ces clés secrètes sont stockées dans des moyens de stockage de la puce et du lecteur référencés respectivement 10 et 20.

Le protocole HB+ se déroule sur *r* tours successifs. A chaque tour, la puce tire au sort (bloc 100) et transmet (1) au lecteur un vecteur binaire *b* de *n* bits. De même, le lecteur tire au sort (bloc 200) et transmet (2) à la puce un vecteur binaire *a* de *n* bits. Le tirage au sort des vecteurs *b* et *a* est réalisé selon une loi de probabilité uniforme.

La puce répond ensuite au défi *a* lancé par le lecteur en calculant (bloc 120) et en lui transmettant (3) une réponse bruitée *z* = *a* • *x* ⊕ *b* • *y* ⊕ *v*, où • représente l'opération produit scalaire modulo 2 et ⊕ l'addition modulo 2. *v* est un bit de bruit tiré au sort par la puce (bloc 110) ; il prend la valeur 1 avec une probabilité η < 1/2 et la valeur 0 avec une probabilité (1 - η).

Le lecteur rejette le tour courant (bloc 210) si la réponse *z* reçue ne vérifie pas la relation *z* = *a* • *x* ⊕ *b* • *y* ; dans ce cas, un compteur des nombres de tours rejetés *nbr* est incrémenté d'une unité (bloc 220). A l'issue des r tours, comptabilisés par un compteur du nombre de tours *nbt* (bloc 250), l'authentification est acceptée (bloc 240) si et seulement si le nombre de tours rejetés *nbr* du compteur est inférieur à un seuil *t* donné (bloc 230). La valeur de *t* est bien entendu fonction de la probabilité η ; une valeur simple de *t* est par exemple *t* = *r* × η.

Bien que les échanges du protocole HB+ proposé soient structurés en *r* tours de trois passes, il est possible de se ramener à un échange de trois passes en calculant et transmettant en une seule fois *r* valeurs de *b* , *a* et *z*.

L'avantage du protocole HB+ réside dans la grande simplicité des calculs d'authentification.

De plus, il tire sa robustesse de la difficulté du problème LPN («Learning *Parity with Noise* ») de trouver une solution à un système linéaire bruité. Enfin, le protocole HB+ bénéficie, par comparaison avec le protocole HB historiquement antérieur et qui en différait en ce que la réponse bruitée ne comprenait pas de terme *b* • *y*, du fait de l'effet de masquage induit par le vecteur binaire *b* couplé à la clé secrète *y* ; en effet, le protocole HB était sensible aux attaques consistant pour l'adversaire à envoyer des défis *a* constants et à écouter les réponses du lecteur ; la réponse la plus fréquente étant *a* • *x*, et *a* étant connu, on pouvait dans un premier temps obtenir *a* • *x* pour un nombre suffisant de valeurs de *a*, et dans un deuxième temps en déduire *x* par résolution d'un système linéaire.

Cependant, le protocole HB+ présente des inconvénients qui lui interdisent d'être utilisé efficacement dans la pratique.

Un premier inconvénient tient au fait que même si, comme on l'a vu, il résiste à certaines attaques actives sur *a*, ce protocole reste néanmoins vulnérable à d'autres attaques rencontrées lorsqu'un adversaire a accès aux résultats en termes de succès/échecs de plusieurs authentifications successives.

Une telle attaque consiste à intercepter le défi *a* lors de sa transmission du lecteur vers la puce et à en modifier successivement les bits. Si, par exemple, le premier bit de *a* est modifié, on comprend que si le résultat n'est pas changé à la suite de cette modification, on peut en conclure que le premier bit du vecteur secret *x* est vraisemblablement 0. Inversement, si le résultat est changé, le premier bit de *x* est probablement égal à 1. Pour obtenir la totalité des *n* bits de *x*, il suffit de modifier le deuxième bit de *a* pour connaître le deuxième bit de *x*, et ainsi de suite jusqu'à *n*.

Un deuxième inconvénient du protocole HB+ est qu'il aboutit à un nombre de fausses alertes excessivement élevé, une fausse alerte étant définie comme le rejet de l'authentification de puces légitimes. Ainsi, par exemple, avec les valeurs *n* = 224 bits, η = 0,25, *r* = 100 tours et *t* = η × *r* = 25, le taux de fausses alertes est de 45% , valeur tout à fait inacceptable. Le taux de faux positifs, c'est-à-dire de succès de l'authentification pour des puces répondant au hasard, est voisin de 3.10⁻⁷.

Si au lieu de prendre pour *t* la valeur attendue η × *r* = 25, on prend une valeur supérieure comme par exemple 35, le taux de fausses alertes descend à 1%, ce qui reste inacceptable, mais le taux de faux positifs augmente à environ 1,7·10⁻³.

Enfin, un troisième inconvénient de HB+ est la complexité excessive qu'il induit dans les communications entre la puce et le lecteur. Avec les mêmes chiffres que précédemment, on peut voir qu'il est nécessaire d'échanger 44900 bits à chaque authentification, soit, à chacun des 100 tours, 224 bits pour *b* , 224 bits pour *a*, et un bit pour le résultat *z*.

On voit que, même avec un débit de 10000 bits/s, il faut plus de quatre secondes au lecteur pour authentifier une puce, ce qui reste une valeur prohibitive pour l'ergonomie du système, sans compter les problèmes d'alimentation de la puce qui en découlent.

L'invention concerne donc un procédé d'authentification d'une entité auprès d'une entité vérificatrice, lesdites entités partageant une paire de clés secrètes *X* et *Y*. Ledit procédé est remarquable en ce que lesdites clés secrètes *X* et *Y* sont des matrices binaires *n* × *m* (*n*,*m* > 1), et en ce qu'il comprend des étapes répétées *r* fois (*r* ≥ 1) consistant :
- pour l'entité à authentifier et l'entité vérificatrice, à échanger des vecteurs binaires *a e*t b de *n* bits respectivement tirés au sort par l'entité vérificatrice et l'entité à authentifier, et, pour l'entité à authentifier, à tirer au sort un vecteur binaire de bruit *c* de *m* bits, chacun desdits *m* bits étant égal à 1 avec une probabilité η inférieure à 1/2, et à calculer et transmettre à l'entité vérificatrice un vecteur de réponse *z* de *m* bits égal à *z* = *aX* ⊕ *bY* ⊕ *c*,
- pour l'entité vérificatrice, à calculer le poids de Hamming d'un vecteur d'erreur *e* = *z* ⊕ *aX* ⊕ *bY* ,
puis, pour l'entité vérificatrice, à accepter l'authentification si les poids de Hamming des *r* vecteurs d'erreur *e* vérifient une relation de comparaison à un paramètre fonction de la probabilité η.

Ainsi, on peut constater que le procédé conforme à l'invention offre, par rapport au protocole HB+, une meilleure résistance aux attaques consistant à modifier les bits du défi *a* dans le but de reconstituer le secret *X*. En effet, si le premier bit de *a* est modifié, cette modification affecte les produits de ce bit avec les premiers bits des *m* colonnes de *X*, ce qui affecte également les *m*. bits du produit *aX* et donc la réponse *z* dans son ensemble. Par conséquent, il n'est pas possible de déduire de l'observation de l'effet d'une modification de bits de *a* sur le résultat d'authentification une quelconque information sur le secret *X* puisque plusieurs des *m* bits de *z* peuvent être modifiés sans qu'on puisse connaître leur nombre ni leur position, alors que dans le cas du protocole HB+ toute modification d'un bit de *a* affecte directement la réponse *z* , celle-ci n'étant constituée que d'un seul bit.

S'agissant des performances du procédé, objet de l'invention, il faut observer que, la réponse *z* à chaque tour s'écrivant sur *m* bits, tout se passe en substance comme si on effectuait *m* tours en un seul.

Il en résulte que, dans une première situation extrême, on peut réduire d'un facteur de l'ordre de *m* le nombre de tours, et donc en pratique limiter le nombre de tours à un seul, ce qui permet de conserver les performances du protocole HB+ en taux de fausses alertes, mais en réduisant le nombre de bits échangés de *r*(2*n* + 1) à (2*n* + *m*), c'est à dire de 44900 bits à 576 bits, avec *n* = 224 et *m* = 128 , ce qui représente un gain considérable. On comprend sur cet exemple tout l'intérêt de l'invention de permettre de limiter à 1 le nombre *r* de tours, ce qui est impossible à envisager dans le cas du protocole HB+.

Dans une deuxième situation extrême, le nombre de tours est le même. Dans ce cas, le nombre de données échangées augmente légèrement, mais par contre le taux de fausses alertes devient insignifiant.

Bien entendu, une situation réaliste sera choisie entre ces deux situations extrêmes avec à la fois une réduction du taux de fausses alertes et du nombre de bits échangés entre la puce et le lecteur.

Quoiqu'il en soit, il est clair que la présente invention offre de meilleures performances que le protocole HB+ en termes de taux de fausses alertes et de quantité d'informations devant être échangées entre les deux entités concernées.

Selon un mode de réalisation particulier de l'invention, lesdites matrices *X* et *Y* sont des matrices de Toeplitz. On verra en détail plus loin que cette disposition avantageuse permet de limiter la capacité de stockage des puces et des lecteurs à (*n* + *m* - 1) au lieu de *n* × *m* dans le cas de matrices choisies quelconques. Un autre avantage est de simplifier le calcul des produits *aX* et *bY.*

L'invention concerne également une entité destinée à être authentifiée par une entité vérificatrice, lesdites entités partageant une paire de clés secrètes *X* et *Y*, remarquable en ce que ladite entité à authentifier comprend des moyens de stockage de clés secrètes *X* et *Y* constituées par des matrices binaires *n* × *m* (*n,m* > 1), des moyens de communication avec l'entité vérificatrice, et des moyens de calcul aptes à effectuer *r* fois (*r* ≥ 1) les étapes consistant :
- à tirer au sort et transmettre à l'entité vérificatrice un vecteur binaire *b* de *n* bits,
- à recevoir de l'entité vérificatrice un vecteur binaire *a* de *n* bits,
- à tirer au sort un vecteur binaire de bruit *c* de *m* bits, chacun desdits *m* bits étant égal à 1 avec une probabilité η inférieure à 1/2, et à calculer et transmettre à l'entité vérificatrice un vecteur de réponse *z* de *m* bits égal à *z* = *aX* ⊕ *bY* ⊕ *c*.

L'invention concerne en outre un programme d'ordinateur comprenant des instructions de programme pour la mise en oeuvre des étapes effectuées par ladite entité à authentifier lorsque ledit programme est exécuté par un ordinateur faisant partie desdits moyens de calcul de l'entité à authentifier.

L'invention concerne, de plus, une entité vérificatrice partageant une paire de clés secrètes *X* et *Y* avec une entité à authentifier, remarquable en ce que ladite entité vérificatrice comprend des moyens de stockage de clés secrètes *X* et *Y* constituées par des matrices binaires *n* × *m* (*n, m* > 1), des moyens de communication avec l'entité à authentifier, et des moyens de calcul aptes à effectuer *r* fois (*r* ≥ 1) les étapes consistant :
- à recevoir de l'entité à authentifier un vecteur binaire *b* de *n* bits,
- à tirer au sort et transmettre à l'entité à authentifier un vecteur binaire *a* de *n* bits,
- à recevoir de l'entité à authentifier un vecteur de réponse *z* de *m* bits,
- à calculer le poids de Hamming d'un vecteur d'erreur *e* = z ⊕ *aX* ⊕ *bY*, et à accepter l'authentification si les poids de Hamming des *r* vecteurs d'erreur *e* vérifient une relation de comparaison à un paramètre (*T*,*t*) fonction d'une probabilité η prédéterminée.

Enfin, l'invention concerne un programme d'ordinateur comprenant des instructions de programme pour la mise en oeuvre des étapes effectuées par ladite entité vérificatrice lorsque ledit programme est exécuté par un ordinateur faisant partie desdits moyens de calcul de l'entité vérificatrice.

La description, donnée à titre d'exemple non limitatif, qui va suivre en regard des dessins annexés fera bien comprendre en quoi consiste l'invention et comment elle peut être réalisée.

La figure 2 représente les échanges entre l'entité à authentifier et l'entité vérificatrice au cours du procédé conforme à l'invention.

La figure 3 est un schéma d'une entité à authentifier conformément au procédé de la figure 2.

La figure 4 est un schéma d'une entité vérificatrice chargée d'authentifier l'entité de la figure 3 conformément au procédé de la figure 2.

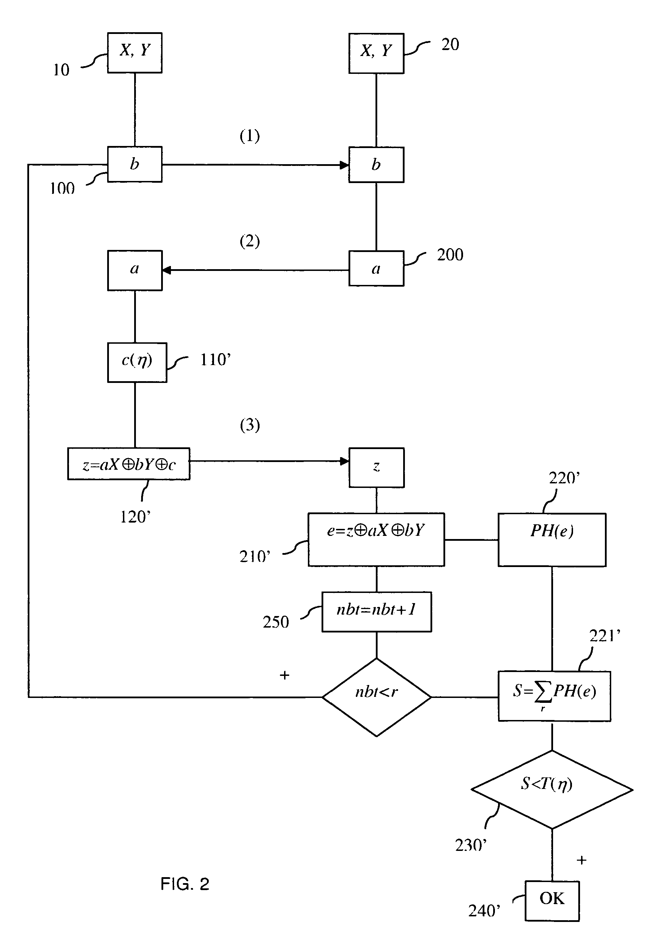

Sur la figure 2 est illustré un procédé d'authentification permettant à une entité vérificatrice, un lecteur de puces avec ou sans contact par exemple, de vérifier l'identité d'une entité à authentifier qui, dans cet exemple, peut être une puce RFID.

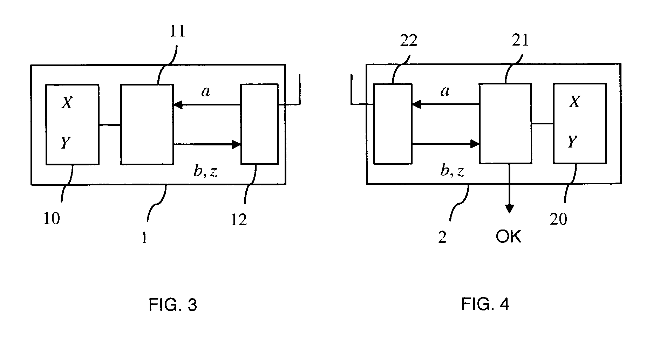

Le procédé décrit à la figure 2 est un procédé dit symétrique où les deux entités, puce et lecteur, partagent les mêmes clés secrètes. Celles-ci, désignées *X* et *Y* , sont des matrices binaires *n* × *m* (*n, m* > 1) comportant *n* lignes et *m* colonnes. Les clés secrètes *X* et *Y* sont stockées dans des moyens de stockage de la puce et du lecteur référencés respectivement 10 et 20 sur la figure 2, ainsi que sur les figures 3 et 4.

Le procédé conforme à l'invention est structuré en étapes répétées *r* fois (*r* ≥ 1). On entend par « *r* fois » le fait que les échanges entre la puce et le lecteur peuvent être effectués séquentiellement en *r* tours de, trois passes, comme indiqué sur la figure 2, où le nombre de tours *nbt* est incrémenté de 1 à chaque tour par un compteur (bloc 250), ou bien en parallèle sur trois passes, chaque passe comprenant la transmission de *r* données d'une entité à une autre.

Dans l'exemple de la figure 2, la puce 1 tire au sort à chaque tour (bloc 100) et transmet (1) au lecteur 2 un vecteur binaire uniligne *b* de *n* bits. Le lecteur 2 transmet (2) alors à la puce 1 un défi *a* (bloc 200) qui est également un vecteur binaire uniligne de *n* bits tiré au sort. Le tirage au sort des vecteurs binaires *b* et *a* est réalisé selon une distribution uniforme des bits 0 et 1.

En réponse au défi *a*, la puce 1 transmet (3) au lecteur 2 un vecteur binaire uniligne *z* de *m* bits égal à la somme modulo 2 *z* = *aX* ⊕ *bY* ⊕ *c* (bloc 120'), où *c* est un vecteur binaire uniligne de bruit de *m* bits, tiré au sort (bloc 110') par la puce 1 selon une loi de probabilité assurant que chaque bit de *c* est égal à 1 avec une probabilité égale, ou inférieure ou égale, à un paramètre η inférieur à 1/ 2. Pour ce faire, chaque bit du vecteur de bruit *c* peut être tiré au sort indépendamment, selon une loi de Bernoulli de paramètre η < 1/2. Le vecteur de bruit *c* peut également être tiré au sort parmi l'ensemble des vecteurs de *m* bits dont la somme des bits, ou poids de Hamming, est au plus égale ou égale à la valeur η × *m* avec η < 1/2. Bien entendu, le vecteur de bruit *c* peut être tiré au sort par la puce en même temps qu'elle tire au sort le vecteur binaire *b* dont on rappellera qu'il sert de masquage aux attaques actives sur le vecteur *a*.

A chaque tour, le lecteur 2 calcule (bloc 210') un vecteur d'erreur *e* de *m* bits égal à *e* = *z* ⊕ *aX* ⊕ *bY* où *z* est le vecteur de réponse envoyé par la puce 1, ainsi que le poids de Hamming *PH*(*e*) (bloc 220') du vecteur d'erreur *e* ainsi obtenu.

A l'issue des *r* tours, l'acceptation ou le rejet de l'authentification de la puce 1 par le lecteur 2 est déterminé à partir des *r* poids de Hamming *PH*(*e*) des vecteurs d'erreur *e* obtenus à chaque tour et de leur comparaison à un paramètre fonction de la probabilité η.

Plusieurs stratégies sont alors possibles.

Une première stratégie, représentée sur la figure 2, consiste à accepter l'authentification (bloc 240') si et seulement si la somme *S* des poids de Hamming des *r* vecteurs d'erreur *e* (bloc 221') est inférieure à un seuil *T* donné (bloc 230'), égal par exemple à *r*(η + ε*)m* où ε est une marge inférieure à 1/2, éventuellement nulle.

Une deuxième stratégie consiste à accepter l'authentification si et seulement si le poids de Hamming du vecteur d'erreur *e* obtenu à chaque tour est inférieur à un seuil *t*.

Enfin, une troisième stratégie consiste à accepter l'authentification si et seulement si le poids de Hamming du vecteur d'erreur *e* obtenu à chaque tour est égal à une valeur *t*.

Dans ces deux derniers cas, le paramètre *t* vaut (η + ε)*m* où ε est une marge inférieure à 1/2, éventuellement nulle.

En prenant *r* = 1, *n* = 256, *m* = 128, η = 0,25 et avec un tirage au sort du vecteur de bruit *c* parmi les vecteurs binaires de longueur 128 et de poids de Hamming 32, soit η × *m*, l'authentification de la puce sera acceptée selon la troisième stratégie ci-dessus si et seulement si le poids du vecteur d'erreur *e* est à chaque tour exactement égal à 32, ceci avec ε = 0.

Dans cet exemple, on peut voir que la longueur totale des échanges est de seulement 640 bits, soit (2*n* + *m*). D'autre part, on peut observer que le taux de fausses alertes est strictement nul et que la taux de faux positifs pour une attaque consistant à essayer une valeur aléatoire de *z* est voisin de 10⁻⁸, ce qui est tout à fait acceptable en pratique.

Sur la figure 2, la séquence des échanges entre la puce 1 et le lecteur 2 est : envoi de *b* au lecteur, envoi de *a* à la puce, tirage au sort de *c* par la puce et envoi de *z* au lecteur. Il faut cependant noter qu'une autre séquence pourrait également être utilisée, à savoir : envoi de *a* à la puce, tirage au sort de *b* et de *c* par la puce et envoi de *b* et de *z* au lecteur. Cette dernière séquence a l'avantage de réduire le nombre des échanges.

Selon un mode de réalisation qui permet de réduire fortement la quantité de mémoire nécessaire pour stocker les matrices *X* et *Y*, ainsi que la complexité des calculs à effectuer par la puce et l'entité vérificatrice, chacune des matrices *X* et *Y* peut être sélectionnée à l'intérieur d'un sous-ensemble strict de l'ensemble des matrices *n* × *m* et décrite dans la puce à l'aide d'un nombre de bits strictement inférieur à *n* × *m*. Ainsi, par exemple, la quantité de mémoire nécessaire pour stocker chaque matrice peut être ramenée à seulement (*n* + *m* - 1) lorsque *X* et *Y* sont des matrices de Toeplitz, à savoir des matrices à coefficients constants le long des diagonales, et dont l'ensemble des coefficients est entièrement déterminé par les coefficients de la première ligne et de la première colonne. Si *X* est une matrice de Toeplitz et si *x_{i,j}* désigne le coefficient de la *i* -ème ligne et de la *j-*ième colonne, *x_{i,j}* est égal à *x*_{*i-j*+1},₁ si *i* est supérieur ou égal à *j*, et à *x*_{*i,j-i*+1} dans le cas contraire.

Le mode de réalisation suivant permet d'effectuer très efficacement bit par bit le produit d'un vecteur binaire, *a* par exemple, et d'une matrice de Toeplitz, *X* par exemple, décrite au moyen des (*n* + *m* -1) coefficients de sa première ligne et de sa première colonne, et utilisant deux registres de *m* bits, l'un pour calculer la ligne courante de la matrice et l'autre, initialisé à 0, pour accumuler les résultats partiels du produit vecteur-matrice. Le premier registre est initialisé à l'aide de la première ligne de *X*, puis chacun des bits du vecteur *a* est traité de la manière suivante : si le bit courant de *a* est égal à 1, la valeur de la ligne courante de *X* est combinée par « ou » exclusif bit à bit avec la valeur courante du registre d'accumulation des résultats partiels. Dans le cas contraire, la valeur courante de ce registre n'est pas modifiée. Dans les deux cas, tant que la ligne courante n'est pas la dernière ligne de la matrice *X*, le registre contenant la ligne courante de cette matrice est mis à jour en effectuant une rotation du contenu de ce registre d'un bit vers la droite, suivie de la recopie dans la cellule de gauche de ce registre du coefficient de la première colonne correspondant à la nouvelle ligne courante.

Comme le montre la figure 3, la puce 1 destinée à être authentifiée par le lecteur 2, ces deux entités partageant une paire de clés secrètes *X* et *Y* , comprend des moyens 10 de stockage des clés secrètes *X* et *Y* constituées par des matrices binaires *n* × *m* (*n,m* > 1), des moyens 12 de communication avec le lecteur 2, et des moyens 11 de calcul aptes à effectuer *r* fois (*r* ≥ 1) les étapes consistant, conformément au procédé décrit en regard de la figure 2 :
- à tirer au sort et transmettre au lecteur 2 un vecteur binaire *b* de *n* bits,
- à recevoir du lecteur 2 un vecteur binaire a de *n* bits,
- à tirer au sort un vecteur binaire de bruit *c* de *m* bits, chacun desdits *m* bits étant égal à 1 avec une probabilité η inférieure à 1/2, et à calculer et transmettre au lecteur 2 un vecteur de réponse *z* de *m* bits égal à *z* = *aX* ⊕ *bY* ⊕ *c*.

De même, on peut voir sur la figure 4 un lecteur 2 chargé d'authentifier une puce 1, comprenant des moyens 20 de stockage des clés secrètes *X* et *Y* constituées par des matrices binaires *n* × *m* (*n,m* > 1), des moyens 22 de communication avec la puce 1 à authentifier, et des moyens 21 de calcul aptes à effectuer *r* fois (*r* ≥ 1 ) les étapes consistant, conformément au procédé décrit en regard de la figure 2 :
- à recevoir de la puce 1 à authentifier un vecteur binaire *b* de *n* bits,
- à tirer au sort et transmettre à la puce 1 un vecteur binaire *a* de *n* bits,
- à recevoir de la puce 1 un vecteur de réponse *z* de *m* bits,
- à calculer le poids de Hamming d'un vecteur d'erreur *e* = *z* ⊕ *aX* ⊕ *bY*, et à accepter l'authentification si les poids de Hamming des *r* vecteurs d'erreur *e* vérifient une relation de comparaison à un paramètre fonction de la probabilité η. En particulier, l'authentification est acceptée si la somme des poids de Hamming des vecteurs d'erreur *e* obtenus sur les *r* tours est inférieure à un paramètre égal à un seuil *T*, comme cela a été décrit en détail plus haut.

## Revendications

1. Procédé d'authentification d'une entité (1) auprès d'une entité vérificatrice (2), lesdites entités partageant une paire de clés secrètes *X* et *Y*, ledit procédé comprenant des étapes répétées *r* fois, avec *r* ≥ 1, consistant :
- pour l'entité (1) à authentifier et l'entité vérificatrice (2), à échanger des vecteurs binaires *a* et *b* de *n* bits respectivement tirés au sort par l'entité vérificatrice (2) et l'entité (1) à authentifier, et, pour l'entité (1) à authentifier, à tirer au sort un vecteur binaire de bruit *c* de *m* bits, chacun desdits *m* bits étant égal à 1 avec une probabilité η inférieure à 1/2, et à calculer et transmettre à l'entité vérificatrice (2) un vecteur de réponse z de *m* bits égal à *z* = *aX* ⊕ *bY* ⊕ *c,*
- pour l'entité vérificatrice (2), à calculer le poids de Hamming d'un vecteur d'erreur *e* = z ⊕ *aX ⊕ bY* ,
puis, à l'issue de ces étapes répétées r fois, une étape consistant, pour l'entité vérificatrice (2), à accepter l'authentification si les poids de Hamming des *r* vecteurs d'erreur *e* vérifient une relation de comparaison à un paramètre (*T,t*) fonction de la probabilité η, ledit procédé étant **caractérisé en ce que** lesdites clés secrètes X et Y sont des matrices binaires n x m, avec n, m > 1.

2. Procédé selon la revendication 1, dans lequel ladite relation de comparaison consiste en ce que la somme des poids de Hamming des vecteurs d'erreur *e* obtenus sur les *r* tours est inférieure à un paramètre égal à un seuil *T*.

3. Procédé selon la revendication 2, dans lequel le seuil T vaut *r*(η + ε)*m* où ε est une marge inférieure à 1/2.

4. Procédé selon la revendication 1, dans lequel ladite relation de comparaison consiste en ce que le poids de Hamming du vecteur d'erreur *e* obtenu à chaque tour est inférieur à un paramètre égal à un seuil t*.*

5. Procédé selon la revendication 1, dans lequel ladite relation de comparaison consiste en ce que le poids de Hamming du vecteur d'erreur *e* obtenu à chaque tour est égal à un paramètre égal à une valeur *t*.

6. Procédé selon l'une des revendications 4 ou 5, dans lequel *t* vaut (η + ε)*m* où ε est une marge inférieure à 1/2.

7. Procédé selon l'une quelconque des revendications 1 à 6, dans lequel lesdites matrices *X* et *Y* sont des matrices de Toeplitz.

8. Entité destinée à être authentifiée par une entité vérificatrice (2), lesdites entités partageant une paire de clés secrètes *X* et *Y*, ladite entité (1) à authentifier comprenant des moyens (10) de stockage des clés secrètes *X* et *Y*, des moyens (12) de communication avec l'entité vérificatrice (2), et des moyens (11) de calcul aptes à effectuer *r* fois, avec *r* ≥ 1, les étapes consistant :
- à tirer au sort et transmettre à l'entité vérificatrice (2) un vecteur binaire *b* de *n* bits,
- à recevoir de l'entité vérificatrice (2) un vecteur binaire *a* de *n* bits,
- à tirer au sort un vecteur binaire de bruit *c* de *m* bits, chacun desdits *m* bits étant égal à 1 avec une probabilité η inférieure à 1/2, et à calculer et transmettre à l'entité vérificatrice (2) un vecteur de réponse *z* de *m* bits égal à *z* = a*X* ⊕ *bY* ⊕ *c*, ladite entité destinée à être authentifiée étant caractérisée

9. Programme d'ordinateur comprenant des instructions de programme pour la mise en oeuvre des étapes de la revendication 8 lorsque ledit programme est exécuté par un ordinateur faisant partie desdits moyens (11) de calcul de l'entité (1) à authentifier.

10. Entité vérificatrice partageant une paire de clés secrètes *X* et *Y* avec une entité (1) à authentifier, ladite entité vérificatrice (2) comprenant des moyens (20) de stockage des clés secrètes *X* et *Y* , des moyens (22) de communication avec l'entité (1) à authentifier, et des moyens (21) de calcul aptes à effectuer *r* fois, avec *r* ≥ 1, les étapes consistant :
- à recevoir de l'entité (1) à authentifier un vecteur binaire *b* de *n* bits,
- à tirer au sort et transmettre à l'entité (1) à authentifier un vecteur binaire *a* de *n* bits,
- à recevoir de l'entité (1) à authentifier un vecteur de réponse *z* de *m* bits,
- à calculer le poids de Hamming d'un vecteur d'erreur *e* = *z* ⊕ *aX* ⊕ *bY*, et, à l'issue de ces étapes répétées r fois, à effectuer une étape consistant à accepter l'authentification si les poids de Hamming des *r* vecteurs d'erreur *e* vérifient une relation de comparaison à un paramètre (*T,t*) fonction d'une probabilité η prédéterminée, ladite entité vérificatrice étant caractérisée

11. Programme d'ordinateur comprenant des instructions de programme pour la mise en oeuvre des étapes de la revendication 10 lorsque ledit programme est exécuté par un ordinateur faisant partie desdits moyens (21) de calcul de l'entité vérificatrice (2).

## Claims

1. Method of authentication of an entity (1) by a verification entity (2), said entities sharing a pair of secret keys *X* and *Y*, said method comprising steps repeated *r* times with *r* ≥ 1, consisting in:
- for the entity (1) to be authenticated and the verification entity (2), exchanging binary vectors a and *b* of *n* bits drawn at random by the verification entity (2) and the entity (1) to be authenticated and, for the entity (1) to be authenticated, drawing at random a binary noise vector of *c* of *m* bits, each of said *m* bits being equal to 1 with a probability η less than 1/2, and calculating and transmitting to the verification entity (2) a response vector *z* of *m* bits equal to *z* = *aX* ⊕ *bY* ⊕ *c*,
- for the verification entity (2), calculating the Hamming weight of an error vector e = *z* ⊕ *aX* ⊕ *bY*,
then, following these steps being repeated *r* times, a step consisting, for the verification entity (2), in accepting the authentication if the Hamming weights of the *r* error vectors e satisfy a relation of comparison to a parameter (*T*, *t*) that is a function of the probability η, said method being **characterized in that** said secret keys *X* and *Y* are binary *n* x *m* matrices, with *n*; *m* > 1.

2. Method according to Claim 1, wherein said comparison relation consists in that the sum of the Hamming weights of the error vectors e obtained in the *r* passes is less than a parameter equal to a threshold *T.*

3. Method according to Claim 2, wherein the threshold *T* has the value *r*(η+ε)*m* where ε is a margin less than 1/2.

4. Method according to Claim 1, wherein said comparison relation consists in that the Hamming weight of the error vector e obtained in each pass is less than a parameter equal to a threshold t.

5. Method according to Claim 1, wherein said comparison relation consists in that the Hamming weight of the error vector e obtained in each pass is equal to a parameter equal to a value t.

6. Method according to either one of Claims 4 or 5, wherein *t* has the value (η+ε)*m* where ε is a margin less than 1/2.

7. Method according to any one of Claims 1 to 6, wherein said matrices *X* and *Y* are Toeplitz matrices.

8. Entity to be authenticated by a verification entity (2), said entities sharing a pair of secret keys *X* and *Y*, said entity (1) to be authenticated comprising means (10) for storing the secret keys *X* and *Y*, means (12) for communication with the verification entity (2), and calculation means (11) adapted to effect *r* times, with *r* ≥ 1, the steps consisting in:
- drawing at random and transmitting to the verification entity (2) a binary vector *b* of *n* bits,
- receiving from the verification entity (2) a binary vector *a* of *n* bits,
- drawing at random a binary noise vector *c* of *m* bits, each of said *m* bits being equal to 1 with a probability η less than 1/2, and calculating and transmitting to the verification entity (2) a response vector *z* of *m* bits equal to *z* = *aX* ⊕ *bY* ⊕ *c*, said entity to be authenticated being **characterized in that** said secret keys *X* and *Y* are binary *n* x *m* matrices, with *n*, *m* > 1.

9. Computer program comprising program instructions for execution of the steps of Claim 8 when said program is executed by a computer forming part of said calculation means (11) of the entity (1) to be authenticated.

10. Verification entity sharing a pair of secret keys *X* and *Y* with an entity (1) to be authenticated, said verification entity (2) comprising means (20) for storing the secret keys *X* and *Y*, means (22) for communication with said entity (1) to be authenticated, and calculation means (21) adapted to effect *r* times, with *r* ≥ 1, the steps consisting in:
- receiving from the entity (1) to be authenticated a binary vector *b* of *n* bits,
- drawing at random and transmitting to the entity (1) to be authenticated a binary vector *a* of *n* bits,
- receiving from the entity (1) to be authenticated a response vector *z* of *m* bits,
- calculating the Hamming weight of an error vector *e* = *z* ⊕ *aX* ⊕ *bY* and, following these steps being repeated *r* times, effecting a step consisting in accepting the authentication if the Hamming weights of the *r* error vectors e satisfy a relation of comparison to a parameter (*T*, *t*) that is a function of a predetermined probability η, said verification entity being **characterized in that** said secret keys *X* and *Y* are binary *n* x *m* matrices, with *n*, *m* > 1.

11. Computer program comprising program instructions for execution of the steps of Claim 10 when said program is executed by a computer forming part of said calculation means (21) of the verification entity (2).

## Patentansprüche

1. Verfahren zur Authentifizierung einer Entität (1) bei einer Oberprüfungsentität (2), wobei die Entitäten sich ein Paar von Geheimschlüsseln *X* und *Y* teilen, wobei das Verfahren *r* Mal wiederholte Schritte enthält, mit *r* ≥ 1, die darin bestehen:
- für die zu authentifizierende Entität (1) und die Überprüfungsentität (2), Binärvektoren a und *b* mit *n* Bits auszutauschen, die je von der Überprüfungsentität (2) und der zu authentifizierenden Entität (1) zufällig ausgewählt wurden, und, für die zu authentifizierende Entität (1), einen binären Rauschvektor *c* mit *m* Bits zufällig auszuwählen, wobei jedes der *m* Bits gleich 1 mit einer Wahrscheinlichkeit η geringer als 1/2 ist, und einen Antwortvektor *z* mit *m* Bits gleich *z* = *aX* ⊕ *bY* ⊕ *c* zu berechnen und an die Überprüfungsentität (2) zu übertragen,
- für die Überprüfungsentität (2), das Hamming-Gewicht eines Fehlervektors *e* = z ⊕ *aX* ⊕ *bY* zu berechnen,
dann, nach diesen *r* Mal wiederholten Schritten, einen Schritt, der für die Überprüfungsentität (2) darin besteht, die Authentifizierung zu akzeptieren, wenn die Hamming-Gewichte der *r* Fehlervektoren *e* eine Vergleichsbeziehung mit einem Parameter (*T*, *t*) erfüllen, der von der Wahrscheinlichkeit η abhängt,
wobei das Verfahren **dadurch gekennzeichnet ist, dass** die Geheimschlüssel *X* und *Y* binäre Matrizen *n x m* sind, mit *n*, *m* > 1.

2. Verfahren nach Anspruch 1, bei dem die Vergleichsbeziehung darin besteht, dass die Summe der Hamming-Gewichte der Fehlervektoren *e*, die bei den *r* Runden erhalten werden, geringer als ein Parameter gleich einer Schwelle *T* ist.

3. Verfahren nach Anspruch 2, bei dem die Schwelle T den Wert *r*(η+ε)*m* hat, wobei ε ein Spielraum von weniger als 1/2 ist.

4. Verfahren nach Anspruch 1, bei dem das Vergleichsverhältnis darin besteht, dass das Hamming-Gewicht des bei jeder Runde erhaltenen Fehlervektors *e* geringer als ein Parameter gleich einer Schwelle *t* ist.

5. Verfahren nach Anspruch 1, bei dem das Vergleichsverhältnis darin besteht, dass das Hamming-Gewicht des bei jeder Runde erhaltenen Fehlervektors *e* gleich einem Parameter gleich einem Wert *t* ist.

6. Verfahren nach einem der Ansprüche 4 oder 5, bei dem *t* den Wert (η+ε)*m* hat, wobei ε ein Spielraum geringer als 1/2 ist.

7. Verfahren nach einem der Ansprüche 1 bis 6, bei dem die Matrizen *X* und *Y* Toeplitz-Matrizen sind.

8. Entität, die dazu bestimmt ist, durch eine Überprüfungsentität (2) authentifiziert zu werden, wobei die Entitäten sich ein Paar von Geheimschlüsseln *X* und *Y* teilen, wobei die zu authentifizierende Entität (1) Einrichtungen (10) zum Speichern der Geheimschlüssel *X* und *Y*, Einrichtungen (12) zur Kommunikation mit der Überprüfungsentität (2) und Recheneinrichtungen (11) enthält, die *r* Mal, mit *r* ≥ 1, die Schritte ausführen können, die darin bestehen:
- einen Binärvektor *b* mit *n* Bits zufällig auszuwählen und an die Überprüfungsentität (2) zu übertragen,
- von der Überprüfungsentität (2) einen Binärvektor a mit *n* Bits zu empfangen,
- einen binären Rauschvektor *c* mit *m* Bits zufällig auszuwählen, wobei jedes der *m* Bits gleich 1 mit einer Wahrscheinlichkeit η geringer als 1/2 ist, und einen Antwortvektor z mit *m* Bits gleich *z* = *aX* ⊕ *bY* ⊕ *c* zu berechnen und an die Überprüfungsentität (2) zu übertragen,
wobei die Entität, die dazu bestimmt ist, authentifiziert zu werden, **dadurch gekennzeichnet ist, dass** die Geheimschlüssel *X* und *Y* binäre Matrizen *n* x *m* sind, mit *n*, *m* > 1.

9. Computerprogramm, das Programmanweisungen zur Durchführung der Schritte des Anspruchs 8 enthält, wenn das Programm von einem Computer ausgeführt wird, der Teil der Recheneinrichtungen (11) der zu authentifizierenden Entität (1) ist.

10. Überprüfungsentität, die sich ein Paar von Geheimschlüsseln *X* und *Y* mit einer zu authentifizierenden Entität (1) teilt, wobei die Überprüfungsentität (2) Speichereinrichtungen (20) der Geheimschlüssel *X* und *Y*, Einrichtungen (22) zur Kommunikation mit der zu authentifizierenden Entität (1) und Recheneinrichtungen (21) enthält, die *r* Mal, mit *r* ≥ 1, die Schritte ausführen können, die darin bestehen:
- von der zu authentifizierenden Entität (1) einen Binärvektor *b* mit *n* Bits zu empfangen,
- einen Binärvektor *a* mit *n* Bits zufällig auszuwählen und an die zu authentifizierende Entität (1) zu übertragen,
- von der zu authentifizierenden Entität (1) einen Antwortvektor *z* mit *m* Bits zu empfangen,
- das Hamming-Gewicht eines Fehlervektors *e* = *z* ⊕ *aX* ⊕ *bY* zu berechnen, und nach diesen r Mal wiederholten Schritten einen Schritt auszuführen, der darin besteht, die Authentifizierung zu akzeptieren, wenn die Hamming-Gewichte der *r* Fehlervektoren e eine Vergleichsbeziehung mit einem Parameter (*T*, *t*) erfüllen, der von einer vorbestimmten Wahrscheinlichkeit η abhängt,
wobei die Überprüfungsentität **dadurch gekennzeichnet ist, dass** die Geheimschlüssel *X* und *Y* binäre Matrizen *n* x *m* sind, mit *n*, *m* > 1.

11. Computerprogramm, das Programmanweisungen zur Durchführung der Schritte des Anspruchs 10 enthält, wenn das Programm von einem Computer ausgeführt wird, der Teil der Recheneinrichtungen (21) der Überprüfungsentität (2) ist.
